(19) Europäisches Patentamt
European Patent Office
Office européen des brevets

(11) **EP 2 488 854 B1**

(12) **FASCICULE DE BREVET EUROPEEN**

(45) Date de publication et mention
de la délivrance du brevet:
**05.06.2013 Bulletin 2013/23**

(21) Numéro de dépôt: **10782659.6**

(22) Date de dépôt: **13.10.2010**

(51) Int Cl.:
***G01N 21/64*** *(2006.01)*

(86) Numéro de dépôt international:
**PCT/FR2010/052163**

(87) Numéro de publication internationale:
**WO 2011/045530 (21.04.2011 Gazette 2011/16)**

(54) **PROCEDE ET SYSTEME D'IMAGERIE PAR FONCTIONNALISATION DU SUBSTRAT**

BILDGEBUNGSVERFAHREN UND -SYSTEM UNTER VERWENDUNG VON SUBSTRATFUNKTIONALISIERUNG

IMAGING METHOD AND SYSTEM USING SUBSTRATE FUNCTIONALIZATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.10.2009 FR 0904912**

(43) Date de publication de la demande:
**22.08.2012 Bulletin 2012/34**

(73) Titulaire: **Université de Technologie de Troyes
10010 Troyes Cédex (FR)**

(72) Inventeurs:
• **PLAIN, Jérôme
F-10000 Troyes (FR)**
• **JAFFIOL, Rodolphe
F-10000 Troyes (FR)**

(74) Mandataire: **Novagraaf Technologies
122 rue Edouard Vaillant
92593 Levallois-Perret Cedex (FR)**

(56) Documents cités:
**US-A1- 2009 142 791**

• **MICHALET X ET AL: "ULTRAHIGH RESOLUTION
MULTICOLOR COLOCALIZATION OF SINGLE
FLUORESCENT NANOCRYSTALS",
PROCEEDINGS OF THE INTERNATIONAL
SOCIETY FOR OPTICAL ENGINEERING,
20070911, SPIE, USA LNKD- DOI:
10.1117/12.430768, vol. 4258, 24 janvier 2001
(2001-01-24), pages 8-15, XP008020909, ISSN:
0277-786X**
• **BOUTIN C ET AL: "Surface modified single
molecules free-diffusion evidenced by
fluorescence correlation spectroscopy",
JOURNAL OF FLUORESCENCE NOVEMBER
2008 SPRINGER NEW YORK LLC US, vol. 18, no.
6, novembre 2008 (2008-11), pages 1115-1122,
XP002586046, DOI: DOI:
10.1007/S10895-008-0361-Y**

**Description**

**DOMAINE TECHNIQUE**

La présente invention se rapporte au domaine de l'analyse optique (imagerie et spectroscopie) de particules luminescentes ou optiquement diffusantes.

Elle se rapporte plus particulièrement à un système d'imagerie pour l'analyse de particules fluorescentes dans un échantillon, comprenant un dispositif de microscopie, confocale ou grand champ, et comportant un support en contact avec au moins une partie de cet échantillon. Ce système d'imagerie trouve ses applications principalement dans la réalisation d'un système de spectroscopie par corrélation de fluorescence, ainsi que l'observation et l'étude en milieu biologique des points de contact entre une cellule et le support de ce système d'imagerie.

Elle se rapporte également à un support d'échantillon destiné à équiper un tel système d'imagerie, ainsi qu'à un procédé d'analyse de molécules fluorescentes dans un échantillon par un tel système d'imagerie.

**ÉTAT DE LA TECHNIQUE ANTERIEURE**

Un problème technique général dans ce domaine a trait à la détection de molécules individuelles, que ce soit par imagerie en général ou bien plus spécifiquement par spectroscopie de corrélation de fluorescence (FCS). Les molécules qu'il s'agit de détecter sont des molécules fluorescentes, situées par exemple dans un milieu biologique.

Une détection de molécule unique impose généralement l'utilisation d'un solvant ultra pur (par exemple de l'eau pure) afin de diminuer le plus possible le bruit de fond dû à l'environnement. Or, ces conditions de pureté de la solution ne sont jamais obtenues dans le cas d'expériences en milieu biologique *in vivo,* pour lesquelles le rapport signal-sur-bruit est considérablement détérioré par l'existence d'un bruit de fond, du fait principalement du phénomène d'auto-fluorescence des cellules, ainsi que de la diffusion Raman des composants et de l'environnement cellulaire.

Ce bruit de fond dépend de la taille du volume d'observation : plus le volume d'observation est grand, plus le bruit de fond est important, et réciproquement.

Par ailleurs, la détection de molécules individuelles impose d'avoir une très faible quantité de molécules dans le volume d'observation, idéalement une seule molécule. De telles conditions d'observation peuvent être obtenues en utilisant des solutions de fluorophores suffisamment diluées, mais aussi en diminuant le plus possible le volume de détection.

Par ailleurs, dans des conditions de FCS conventionnelle (i.e. sur la base d'un microscope confocal) il n'est pas possible de détecter des espèces chimiques présentes à des concentrations dépassant la centaine de nanomole par litre (>100 nM). Or un grand nombre de processus biologiques, comme des réactions enzymatiques, l'expression de protéines ou l'action de médicaments, se produisent à des concentrations de l'ordre de 1 à 10 $\mu$M, voire plus. Dans ces conditions où la concentration des molécules d'intérêt devient grande, il apparaît alors également nécessaire de réduire considérablement la taille du volume d'observation, de manière à rendre "visible" les fluctuations du signal de fluorescence et ainsi réaliser de la FCS. Il en est de même avec la mesure du temps de diffusion $\tau_d$. En effet, ceux supérieurs à quelques centaines de millisecondes (>100 ms) sont très difficilement mesurables par FCS conventionnelle, principalement à cause du photoblanchiment des sondes fluorescentes. De nombreux processus, comme la diffusion de protéines membranaires, ou la diffusion dans les milieux denses et hétérogènes comme le collagène, peuvent se dérouler très lentement. Une diminution importante de la taille du volume d'observation permet d'accéder plus facilement à ces phénomènes extrêmement lents.

Toutes ces contraintes visent donc à réduire la taille du volume d'observation, ce qui permet en outre d'éliminer le bruit de fond.

Pour atteindre ce but, il peut être utilisé un microscope confocal, disposant avantageusement d'un objectif de grande ouverture numérique.

En effet, l'image d'un objet quelconque est limité par la diffraction optique. La limite de résolution est directement corrélée à la diffraction (on parle de limite de diffraction). Cette dernière dépend de la longueur d'onde d'éclairage ($\lambda$) et de l'ouverture numérique du système optique (ON), et vaut $\approx \lambda/ON$. Dans ces conditions, dans le domaine du visible, la résolution latérale (perpendiculaire à l'axe optique du microscope) optimale en microscopie traditionnelle est de l'ordre de 300 à 400 nm. Mais le phénomène de diffraction limite également la résolution axiale (i.e. suivant l'axe optique) du microscope. La microscopie confocale constitue à l'heure actuelle l'outil le plus conventionnel pour tendre vers cette limite imposée par la diffraction. Elle permet de réduire le volume d'observation dans les 3 directions de l'espace. Cette technique repose exclusivement sur l'utilisation d'un filtre « pinhole » en détection. Le volume d'observation limité par diffraction a alors une forme elliptique, il est allongé suivant l'axe optique. Avec des objectif de grande ouverture numérique (ON>1.2), le volume d'observation confocal vaut usuellement entre 0.2 et 1 $\mu m^3$.

Dans ces conditions conventionnelles (i.e. sur la base d'un microscope confocal), la FCS ne permet pas de détecter des espèces chimiques présentes dans des concentrations dépassant la centaine de nanomoles par litre, ni de détecter des temps de diffusion supérieurs à quelques centaines de millisecondes.

Dès lors, il apparaît nécessaire de réduire la taille du volume d'observation au-delà de ce qu'offre un microscope selon l'art antérieur, de manière à rendre « visible » les fluctuations du signal de fluorescence et ainsi réaliser une mesure de FCS avec une plus grande précision.

Plusieurs solutions sont connues pour adresser ce problème de détection individuelle des molécules en milieu biologique.

Une première solution (technique dite STED pour « déplétion par émission stimulée ») consiste à utiliser deux sources lasers femtosecondes (ou picosecondes) qui soient synchrones. Cette technique en champ lointain repose sur une inhibition du signal de fluorescence via une voie concurrente de relaxation : l'émission stimulée. L'émission stimulée est utilisée pour « rogner » la périphérie de la tâche de focalisation de l'illumination laser excitatrice, permettant ainsi de réduire les dimensions latérale et axiale du volume confocal.

Néanmoins, la complexité liée à l'utilisation de ce type de source lumineuse et à leur mise en oeuvre en microscopie rend cette technique complexe.

Une seconde solution (technique dite STORM pour « microscopie par reconstruction optique stochastique », ou PALM pour « microscopie par localisation de photo-activation ») est basé sur une localisation très précise du signal de fluorescence de molécules individuelles observées à l'aide d'un microscope grand champ conventionnel. Même si l'image en champ lointain d'une molécule unique est limitée par la diffraction (200-300 nm latéralement et 600-800 nm axialement), il est toujours possible de trouver la position précise de la molécule (i.e. la position centrale du spot limité par la diffraction). Une nouvelle image représentant les positions exactes des molécules peut alors être construite, ce qui permet de visualiser avec une très grande précision des protéines membranaires.

Cependant, cette solution présente l'inconvénient d'exiger des temps d'acquisition trop longs pour envisager des études dynamiques, comme des déplacements de protéines par exemple.

Aussi un certain nombre de nouvelles techniques de réduction du volume d'observation confocal a été proposé. Ces techniques permettent de réaliser une spectroscopie locale basée sur l'analyse des fluctuations du signal de fluorescence de molécule individuelle par FCS.

La spectroscopie de corrélation de fluorescence (FCS en anglais) repose sur l'évaluation de la fonction d'auto-corrélation temporelle $G_{AC}(\tau)$ du signal de fluorescence F*(t)* émis par des molécules qui traversent le volume optique de détection :

$$G_{AC}(\tau) = \frac{\langle F(t)F(t+\tau)\rangle}{\langle F(t)\rangle^2} = \frac{\langle \delta F(t)\delta F(t+\tau)\rangle}{\langle F\rangle^2} + 1 \qquad \text{où} \qquad \delta F(t) = F(t) - \langle F(t)\rangle \qquad (1)$$

$\delta$F(t) représente les fluctuations du signal de fluorescence F(t) par rapport au signal moyen <F(t)>.

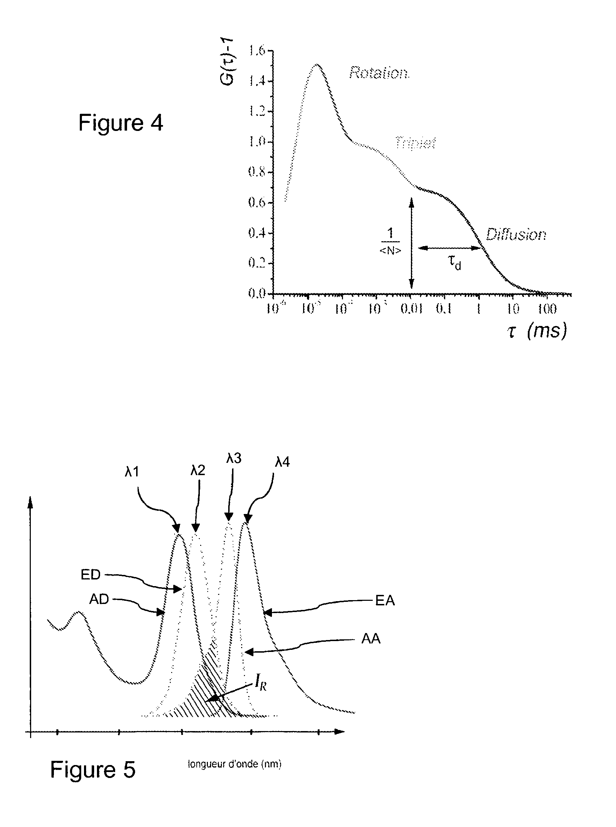

Selon l'équation (1), en FCS on est uniquement sensible aux fluctuations du signal de fluorescence, lesquelles sont principalement reliées aux fluctuations de concentration des molécules dans le volume sondé. Néanmoins, ces fluctuations peuvent avoir plusieurs origines différentes et les processus physiques qui leur donnent naissance se produisent à différentes échelles de temps, figure 4.

Aux temps courts, typiquement inférieurs à 1$\mu$s, l'évolution de $G_{AC}(\tau)$, notée G($\tau$) sur la figure 4, est principalement gouvernée par la dynamique interne de la molécule fluorescente (passage par l'état triplet, rotation, etc...).

Aux temps longs, le processus physique qui gouverne l'évolution de $G_{AC}(\tau)$ est la diffusion (mouvement Brownien ou flux de molécule). Alors l'amplitude de la fonction d'auto-corrélation est inversement proportionnelle au nombre de molécules (<N>) contenues dans le volume d'observation ; le temps de déclin de $G_{AC}(\tau)$ correspond, lui, au temps moyen que met une molécule pour diffuser à travers ce volume. Ce temps est appelé temps de diffusion (noté $\tau_d$ sur la figure 4).

A cela il faut également ajouter les réactions chimiques qui peuvent se produire dans la solution et modifier la dynamique de la molécule étudiée (photobleaching, quenching, chimisorption...).

L'évaluation de <*N*> et de $\tau_d$ constitue les deux types de mesures qui offrent un intérêt majeur en biophysique. En effet, après une première étape de calibration afin d'estimer la taille du volume sondé, il devient alors possible pour un homme de l'art de déduire de <*N*> et de $\tau_d$, le coefficient *D* de diffusion ainsi que la concentration des biomolécules d'intérêt.

Le document "Ultrahigh Resolution Multicolor Colocalization of Single Fluorescent Nanocrystals" de Xavier Michalet et al., Proceedings of the SPIE Vol. 4258 (2001), pages 8-15, 24.01.2001, décrit un dispositif de microscopie confocale permettant l'excitation simultanée et localisation des nano-cristaux avec plusieurs couleurs, déposés sur un substrat.

Parmi ces techniques récentes basées sur la FCS, une troisième solution consiste à utiliser un microscope de type SNOM (« scanning near-field optical microscope ») qui repose sur l'utilisation d'un microscope optique de champ proche, utilisant les ondes évanescentes. L'illumination locale de l'échantillon se fait par exemple à l'aide d'une fibre optique étirée et métallisée. On obtient alors une « nano-source » de lumière à l'extrémité de la fibre. Dès lors, seules les molécules présentes au niveau de l'extrémité seront excitées.

Néanmoins, cette technique s'avère également complexe à mettre en oeuvre en milieu biologique, pour des raisons analogues à celles évoquées en rapport à la seconde solution ci-dessus (STORM).

Une autre technique dite à nano-trous, et susceptible de s'adapter à la fluorescence conventionnelle, permet de réduire la taille du volume d'observation latéralement et axialement (en référence à l'axe optique du microscope), ainsi que d'amplifier le signal de fluorescence. Pour cela, des trous de taille nanométrique sont réalisés dans un film métallique. L'excitation reste alors confinée dans le trou.

Cette dernière technique ne permet cependant pas d'imager un objet dans son ensemble, comme des cellules vivantes. La couche métallique peut modifier l'adhésion des cellules et surtout empêcher toute observation à l'aide de technique usuelle en biologie (contraste de phase, DIC, RICM).

Ainsi, il apparaît qu'aucune solution de l'état de la technique ne permet de réduire de manière significative les dimensions du volume d'observation (typiquement quelques attolitres) pour réaliser une imagerie et/ou une spectroscopie de fluorescence locale, tout en permettant d'imager, en milieu biologique, un ensemble de cellules vivantes avec une résolution axiale très faible (inférieure à 10nm).

Autrement dit, il n'existe pour l'heure aucune solution simple à mettre en oeuvre et qui puisse être compatible avec une observation de fluorescence conventionnelle, afin d'éviter de reconstruire un nouveau système de spectroscopie par FCS, tout en offrant une réduction du volume d'observation.

**OBJET DE L'INVENTION**

Le but de la présente invention est de remédier à ce problème technique, en modifiant uniquement le substrat (ou support de l'échantillon contenant les cellules vivantes). Pour cela, la présente invention repose sur une nouvelle architecture du substrat servant de support au milieu biologique à analyser, cette nouvelle architecture offrant une fonctionnalisation chimique de la surface du support de l'échantillon.

Plus précisément, la présente invention a pour objet un système d'imagerie pour l'analyse de molécules fluorescentes dans un échantillon, comprenant un dispositif de microscopie confocale ou grand champ comportant un support en contact avec au moins une partie de l'échantillon. Dans ce système, la surface du support en contact avec l'échantillon est fonctionnalisée, ce qui permet de réduire axialement le volume d'observation du microscope au niveau de cette surface.

La fonctionnalisation, décrite plus précisément ultérieurement, permet que l'excitation de l'échantillon ne se fasse pas directement avec une source laser focalisée, mais via un transfert d'énergie non-radiatif depuis des nano-objets présents sur la surface du substrat/support vers des fluorophores dispersés dans l'échantillon biologique.

A la différence de l'art antérieur où l'excitation des fluorophores est faite directement par un laser, selon l'invention l'excitation des fluorophores est indirecte, c'est-à-dire qu'elle est faite par des nano-objets luminescents (par exemple des boites quantiques), eux-mêmes préalablement excités par le laser (ou par une excitation électrique).

Une telle fonctionnalisation de la surface du support permet de réduire le volume d'observation (i.e. de collection) de la fluorescence émise par les molécules dans le milieu à analyser. On rend ainsi possible la détection de la fluorescence d'un nombre plus réduit molécules tout en maximisant le rapport signal sur bruit.

En outre, cette fonctionnalisation de la surface du support (transparent) ne modifie quasiment pas sa transparence, ce qui permet de réaliser des images en contraste de phase, DIC ou RICM en milieu biologique. De surcroît, cette fonctionnalisation s'avère peu onéreuse et ne nécessite pas de lourd appareillage pour être mis en oeuvre.

De préférence, cette fonctionnalisation de la surface du support consiste à activer cette surface de manière à ce que les molécules au niveau et à proximité de celle-ci soient excitées via un transfert d'énergie non-radiatif provenant de nano-objets luminescents préalablement excités.

Dès lors, grâce à cette activation, au lieu d'exciter directement l'échantillon avec une source laser focalisée, on rend possible une excitation via un transfert d'énergie non-radiatif au niveau de la surface du support.

De préférence encore, cette activation de la surface du support est obtenue en la revêtant au moins en partie par une pluralité de nano-objets luminescents agencés pour que l'énergie de ces nano-objets soit transférée de manière non-radiative en direction des molécules présentes au niveau et à proximité de cette surface.

Ces nano-objets luminescents sont également appelés boîtes quantiques. Ces nano-objets présentent un certain nombre de propriétés parmi lesquelles, en comparaison avec les fluorophores (i.e. les molécules organiques fluorescentes), une grande photostabilité (peu ou pas de photoblanchiment à température ambiante) et un intense signal de luminescence.

On réalise ainsi un transfert d'énergie non-radiatif (FRET) entre ces nano-objets et les fluorophores. La boîte quantique est le donneur, le fluorophore l'accepteur. De manière chronologique, le donneur absorbe les photons incidents produits préalablement par une source laser à une première longueur d'onde, en l'espèce dans le bleu, et se trouve alors dans un état excité. Il s'opère ensuite le FRET. L'accepteur, qui était initialement dans son état fondamental, passe alors dans son état excité et peut ainsi émettre des photons de fluorescence par relaxation radiative. Ce sont ces photons de fluorescence émis à une deuxième longueur d'onde (différente de la première), en l'espèce vers le rouge, que l'on détecte.

Il est clair pour l'homme du métier que le processus FRET est d'autant plus efficace que la distance entre boîte quantique et fluorophore est petite. Typiquement, on n'observe plus ce phénomène au-delà d'une distance supérieure à 10nm. De ce fait, au voisinage d'une surface fonctionnalisée par des boîtes quantiques, il est possible de créer un volume d'excitation (qui se traduit au moment de la collection de la lumière fluorescente par un volume d'observation) défini par la portée du FRET, c'est-à-dire dont la profondeur ne dépasse pas une dizaine de nanomètres.

Par conséquent, il apparaît que la fonctionnalisation par un revêtement de nano-objets luminescents offre les avantages suivants :

- une détection sélective (pour sélectionner une seule espèce chimique),
- l'affranchissement du bruit de fond, surtout de l'auto-fluorescence,
- la détection de molécules uniques dans une gamme de concentration usuelle en biologie du vivant (gamme de la micromole et plus), et
- la possibilité d'étudier la diffusion dans les systèmes très visqueux, denses et hétérogènes.

Selon différents modes de réalisation particulier, ces nano-objets luminescents :

- se présentent sous la forme de nano-cristaux semi-conducteurs luminescents,
- sont de forme sphérique.

Selon un mode de réalisation particulier dans lequel on cherche à cartographier la présence d'au moins deux espèces chimiques différentes dans une cellule, il peut être prévu que le système d'imagerie selon l'invention comprenne au moins deux types de nano-objets luminescents différents agencés pour que leur énergie respective soit transférée de manière non-radiative en direction de molécules fluorescentes présentes au niveau et à proximité de ladite surface et de natures différentes. C'est-à-dire que l'on choisit le type de nano-objet et le type de fluorophore correspondant de sorte à créer autant de couples donneur-accepteur que d'espèces chimiques à analyser, en sélectionnant les spectres d'émission/absorption respectifs.

De manière avantageuse, il peut être également prévu que le dispositif de microscopie confocale ou grand champ soit muni :

- d'un moyen de focalisation agencé de manière à collecter la lumière générée par la fluorescence des molécules au niveau de la zone de focalisation générée par ledit moyen de focalisation, et/ou
- d'un moyen de filtrage spatial apte à créer un volume d'observation englobant le volume d'excitation par FRET des molécules au niveau de ladite surface du support en contact avec ledit échantillon.

L'invention a également pour objet l'utilisation d'un système d'imagerie tel que décrit ci-dessus pour réaliser un système de spectroscopie par corrélation de fluorescence, le dispositif de microscopie confocale ou grand champ étant muni d'un moyen d'illumination apte à émettre un faisceau lumineux d'excitation en direction de l'échantillon.

L'invention a également pour objet l'utilisation d'un système d'imagerie tel que décrit ci-dessus pour déterminer les positions des points de contact entre une cellule vivante et le support du système.

Un support d'échantillon est décrit, destiné à équiper le dispositif de microscopie confocale ou grand champ d'un système d'imagerie pour l'analyse de molécules fluorescentes dans un échantillon, de sorte que le support soit en contact avec au moins une partie dudit échantillon. La surface de ce support en contact avec l'échantillon présente la particularité d'être fonctionnalisée de manière à réduire axialement le volume d'observation du microscope au niveau de ladite surface.

L'invention a enfin pour objet un procédé d'analyse de particules fluorescentes dans un échantillon par un système d'imagerie, comprenant un dispositif de microscopie confocale ou grand champ comportant lui-même un support en contact avec au moins une partie de l'échantillon. Ce procédé est remarquable notamment en ce que la surface du support en contact avec l'échantillon est préalablement fonctionnalisée de manière à réduire axialement le volume d'observation du microscope au niveau de ladite surface.

La technique mise au point permet de réduire un volume d'observation jusqu'à des dimensions nanométriques, en l'espèce une résolution axiale ≤10nm.

La présente solution permet de réduire fortement la taille du volume d'observation (typiquement quelques attolitres) pour réaliser une FCS locale, mais également d'imager un ensemble de cellules vivantes avec une résolution axiale inférieure ou égale à 10 nm. Elle repose sur une modification du substrat sur lequel est déposé le système biologique à étudier (des cellules vivantes), c'est-à-dire qu'elle nécessite que de fonctionnaliser la surface de verre qui constitue le fond des boîtes de pétri. Aucune modification substantielle de microscope selon l'art antérieur n'est requise, puisque la présente solution repose uniquement sur une nouvelle architecture du substrat/support, compatible avec une observation de fluorescence conventionnelle, par exemple à l'aide d'un microscope grand champ ou confocal.

La présente solution permet notamment l'observation et l'étude des points d'adhésion entre une cellule et un substrat, et la spectroscopie de corrélation de fluorescence locale, qui sont d'intérêt dans le domaine de la biologie / biophysique. L'homme du métier réalisera que l'invention peut être mise en oeuvre également pour tout soluté comprenant des fluorophores, par exemple dans le domaine de la chimie.

## BREVE DESCRIPTION DES DESSINS

L'invention sera mieux comprise à la lecture de la description détaillée d'un exemple non limitatif de réalisation, accompagnée de figures représentant respectivement :

- la figure 1, un schéma d'un système d'imagerie selon l'invention, utilisé pour réaliser un système de spectroscopie par corrélation de fluorescence,
- la figure 2, un schéma illustrant la fonctionnalisation du support dans le cas d'un éclairage focalisé,
- la figure 3, un schéma illustrant la fonctionnalisation du support dans le cas d'un éclairage grand champ,
- la figure 4, l'évolution temporelle de la fonction d'auto-corrélation $G_{AC}(\tau)$ du signal de fluorescence F(t) émis par des molécules qui traversent le volume optique d'observation, et
- la figure 5, des spectres d'absorption et d'émission typiques d'une boîte quantique et d'un fluorophore.

## EXPOSE DETAILLE DE MODES DE REALISATION PARTICULIERS

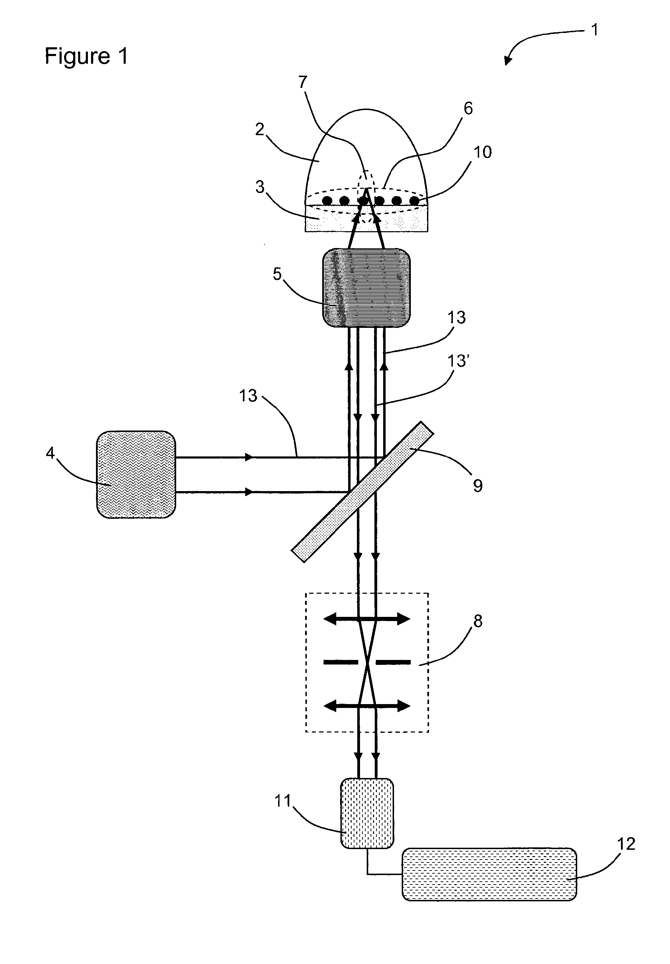

La figure 1 représente un schéma d'un mode de réalisation d'un système d'imagerie, utilisé pour réaliser un système de spectroscopie par corrélation de fluorescence.

Ce système vise à analyser un échantillon 2. Cet échantillon peut être un milieu fluide, liquide, gazeux, ou un objet biologique contenant des molécules à analyser. Les molécules à analyser sont des molécules ou des assemblages moléculaires, par exemple des complexes moléculaires, ci-après appelées « molécules », qui comprennent des fluorophores et qui présentent des dimensions nanométriques, c'est-à-dire de l'ordre de quelques nanomètres à quelques dizaines de nanomètres, et de préférence de l'ordre de grandeur du rayon de Förster $R_0$.

Ce système, comme dans l'art antérieur, comprend un dispositif de microscopie 1, en l'espèce confocale. Ce dispositif de microscopie comporte un support 3, des moyens d'illumination 4 (une source lumineuse), des moyens de détection 11 tel qu'un capteur ou photodétecteur, et des moyens 12 de traitement du signal reçu du moyen de détection 11. Il peut comprendre en outre des moyens de focalisation 5 tel qu'un objectif de microscope ou une lentille, des moyens de séparation dichroïque 9 tel qu'un filtre dichroïque coupe-bande, des moyens de filtrage spatial 8 tel qu'un filtre spatial (pinhole)

Le support 3 comprend par exemple un substrat de verre sensiblement plan, tel qu'une lamelle de microscope ou telle qu'un fond de boîte (notamment boîte de Pétri) de préférence étanche c'est-à-dire dont les parois latérales sont formées par des cales autocollantes résistantes à l'eau. L'échantillon 2 est déposé sur le support 3.

Le moyen d'illumination 4 émet un faisceau lumineux d'excitation 13. De préférence, ce faisceau 13 est collimaté en sortie du moyen d'illumination 4. Le moyen d'illumination 4 comprend par exemple une source laser.

Le faisceau lumineux d'excitation 13 est dirigé vers le moyen de séparation dichroïque 9 (par exemple un filtre dichroïque coupe-bande), disposé par exemple à 45° du faisceau incident d'excitation 13. Le filtre dichroïque est configuré pour diriger, après réflexion sur lui, le faisceau lumineux d'excitation 13 vers les moyens de focalisation 5.

Ces moyens de focalisation 5 ont une double fonction. Ils permettent d'une part de diriger le faisceau vers une zone de focalisation, ou zone d'observation 7, sur l'échantillon 2 au travers du système de microscopie 1, en l'espèce confocale sur la figure 1, et d'autre part de collecter l'intensité lumineuse de fluorescence émise par les molécules. Ces moyens de focalisation 5 comprennent par exemple un objectif de microscope ou une lentille, avantageusement avec une grande ouverture numérique (par exemple 1,2) afin de collecter une intensité lumineuse de fluorescence optimale. Ces moyens de focalisation 5 peuvent diriger le faisceau, c'est-à-dire le focaliser ou le concentrer, soit de manière parallèle en microscopie grand champ, soit de manière focalisée en microscopie confocale.

Dans le système proposé, un échantillon 2 est déposé sur le support 3 déposé dans le dispositif de microscopie 1.

A la différence de l'art antérieur, il est proposé de fonctionnaliser le support 3 de sorte que celui-ci soit revêtu au moins en partie par une pluralité de nano-objets luminescents 10. Ces nano-objets, encore appelés boîtes quantiques, se présentent par exemple sous la forme de nano-cristaux semi-conducteurs luminescents, notamment de forme sphérique.

De préférence, les boites quantiques 10 sont dispersées dans un film de polyméthacrylate de méthyl (PPMA) déposé en fine couche sur le support 3 et dont l'épaisseur est comprise entre 8 et 10 nm (pour une épaisseur ou diamètre de boites quantiques d'environ 7-8 nm), ce qui garantit la présence d'une quasi-monocouche de boites quantiques sur le support 3.

Ces boîtes quantiques 10, ainsi disposées sur le support 3, permettent lorsqu'elles sont pré-excitées, un transfert non-radiatif d'énergie (FRET) avec les fluorophores des molécules de l'échantillon 2 lorsque ceux-ci sont à proximité de la surface du support 3, c'est-à-dire à proximité de ces boîtes quantiques 10. Seuls les photons de fluorescence générés par des fluorophores à proximité de ces boîtes peuvent être obtenus. Dès lors, seule la fluorescence des molécules correspondantes peut être détectée.

Il est en effet possible de réaliser du FRET (« Förster Resonance Energy Transfer ») entre deux espèces de nature différente, en particulier entre des boîtes quantiques et des fluorophores. Les boîtes quantiques « Q-Dots » sont typiquement des cristaux semi-conducteurs luminescents, de dimensions nanométriques (typiquement 7-8 nm de diamètre pour des objets sphériques). Ces nanocristaux possèdent un grand nombre de propriétés parmi lesquelles, en comparaison avec un fluorophore classique, une grande photostabilité (peu ou pas de photoblanchiment à température ambiante) et un intense signal de luminescence.

Un transfert d'énergie non-radiatif se produit entre une boîte quantique dans son état excité D*, vers un fluorophore dans son état fondamental A. On dit alors que la boîte quantique est le "donneur" et le fluorophore "l'accepteur". Le transfert d'énergie peut alors s'écrire symboliquement : D*+A -> D+A*.

Le donneur (ici la boîte quantique) absorbe des photons incidents produits par une source laser, en l'espèce dans le bleu, il se trouve alors dans son état excité D*. C'est le phénomène de pré-excitation. Lorsque le donneur et l'accepteur sont à distance l'un de l'autre (c'est-à-dire en deçà du rayon d'action du FRET d'environ 10 nm), le transfert non radiatif de type FRET s'effectue : le fluorophore de l'échantillon 2, qui était initialement dans son état fondamental A, passe alors dans son état excité A* et peut ainsi ensuite émettre des photons de fluorescence par relaxation radiative. Ce sont ces photons de fluorescence, émis en l'espèce vers le rouge, qui sont détectés, comme décrit ultérieurement, par les moyens de détection 11.

Le taux de désexcitation relatif à ce transfert d'énergie non-radiatif est donné par :

$$k_{F\ddot{o}rster} = \frac{1}{\tau_D}\left(\frac{R_0}{R}\right)^6 \; \propto \; \frac{\Phi_D}{\tau_D}\frac{I_R}{R^6} \qquad\qquad (2)$$

où $\tau_D$ est la durée de vie de l'état excité du donneur en l'absence de l'accepteur, R est la distance entre donneur et accepteur. Ro représente le rayon de Fôrster, c'est la distance R séparant le donneur de l'accepteur pour laquelle l'efficacité du transfert est de 50%. Ro est typiquement de l'ordre de 5 à 10 nm. $k_{F\ddot{o}ster}$ peut aussi s'écrire en fonction de l'intégrale $I_R$ de recouvrement entre le spectre d'émission du donneur et le spectre d'absorption de l'accepteur et du rendement quantique $\Phi_D$ du donneur en l'absence de l'accepteur. L'expression (2) montre alors que le processus de FRET est d'autant plus efficace que l'intégrale de recouvrement $I_R$ est importante et que la distance boîte quantique-fluorophore est petite.

On a donc un phénomène à quatre spectres, voir figure 5 , d'absorption et d'émission pour le donneur et l'accepteur respectivement :

Un spectre d'absorption du donneur AD (boîte quantique) est centré autour d'une première longueur d'onde $\lambda 1$, correspondant à la longueur d'onde maximale des moyens d'illumination 4, en l'espèce laser bleu.
L'absorption par les boites quantiques de cette énergie les place dans leur état excité. Elles se désexcitent selon un spectre d'émission ED du donneur centré autour d'une deuxième longueur d'onde $\lambda 2$, telle que $\lambda 2 > \lambda 1$.
Un spectre d'absorption de l'accepteur AA (fluorophore), centré autour d'une troisième longueur d'onde $\lambda 3$ et recouvrant au moins partiellement le spectre ED d'émission du donneur (centré autour de $\lambda 2$), et tel que $\lambda 3 > \lambda 2$.
L'absorption par les flurophores de cette énergie les place dans leur état excité. Ils se désexcitent selon un spectre d'émission de l'accepteur EA, centré autour d'une quatrième longueur d'onde $\lambda 4$, telle que $\lambda 4 > \lambda 3$.

On choisit de préférence d'exciter le donneur dans une gamme de longueur d'onde où l'accepteur n'absorbe pas. Le décalage spectral entre la longueur d'onde d'excitation laser et l'émission de fluorescence de l'accepteur est alors très grand (typiquement 200 nm). Ainsi en centrant la fenêtre spectrale de détection sur l'émission de l'accepteur, il est possible de réduire considérablement le bruit de fond. L'autofluorescence, le Raman et l'excitation directe de l'accepteur ne représentant alors plus que quelques % (5 à 10 % maximum) du signal total détecté.

Le fonctionnement du système est le suivant : le faisceau lumineux d'excitation 13, de préférence focalisé, interagit avec les flurophores contenus dans les molécules en solution dans l'échantillon 2 non pas directement comme selon l'art antérieur, mais par l'intermédiaire des boites quantiques, via un transfert d'énergie non-radiatif. Chaque molécule en solution excitée par une boîte quantique émet par fluorescence une réponse lumineuse à une longueur d'onde supérieure à celle du faisceau d'excitation 13 et celle de la boîte quantique 10. Une partie de cette réponse lumineuse est alors collectée par le moyen de focalisation 5 de sorte à former un faisceau lumineux de réponse 13'.

Ce faisceau lumineux de réponse 13' est envoyé vers le moyen de détection 11 au travers des moyens respectivement de focalisation 5, de séparation dichroïque 9 et de filtrage spatial 8. La longueur d'onde de coupure du filtre dichroïque est choisie de sorte à transmettre le faisceau lumineux de réponse 13', dont la longueur d'onde est supérieure à celle du faisceau d'excitation 13.

Afin de réaliser la détection du faisceau de réponse 13', le moyen de filtrage spatial 8 comprend en outre un ensemble de lentilles permettant de conjuguer le plan focal du moyen de focalisation 5 avec le capteur du moyen de détection 11. Les moyens de filtrage spatial 8 comprennent également une ouverture de dimension réglable, disposée suivant l'axe optique du système. Elle est conjuguée optiquement avec la zone de focalisation du moyen de focalisation 5.

Ce moyen de filtrage spatial 8 permet de sélectionner un volume de détection - ou volume de filtrage spatial, ou encore volume confocal - autour de la zone de focalisation, puisque des rayons lumineux ne provenant pas de ce volume de filtrage spatial ne traversent pas l'ouverture. Les dimensions de la zone de détection sont d'autant plus petites que celles de l'ouverture le sont également.

Le moyen de détection 11 permet la mesure de l'intensité du flux lumineux de réponse 13' produit par l'interaction du faisceau d'excitation 13 sur l'échantillon 2 par l'intermédiaire des boites quantiques 10, et collecté par le dispositif de microscopie, en l'espèce confocale 1. Ce moyen 11 peut comprendre des photodétecteurs à amplification d'électrons, tels que des photodiodes fonctionnant en régime d'avalanche ou de cascade. Ces photodétecteurs peuvent également être des photomultiplicateurs, des photodétecteurs à amplification optique, des caméras CCD ou CMOS refroidies.

Le signal issu du moyen de détection 11 est envoyé vers des moyens de traitement 12 du signal. Ce moyen 12 comprend par exemple un processeur, un compteur, et un corrélateur et permet de traiter numériquement les données reçues. Le compteur réalise l'enregistrement de la valeur de l'intensité lumineuse de fluorescence reçue et le corrélateur réalise l'analyse temporelle des fluctuations de l'intensité lumineuse de fluorescence reçue. Cette analyse peut se faire aux temps courts et aux temps longs de sorte à obtenir des informations complémentaires sur les molécules en solution dans l'échantillon 2. Aux temps courts, la fonction d'autocorrélation de l'intensité lumineuse détectée permet d'avoir accès aux paramètres photophysiques des émetteurs ainsi qu'au nombre moyen de molécules détectées. Aux temps longs, cette fonction renseigne sur le temps de séjour moyen - temps de diffusion - des molécules et sur leur mode de diffusion au travers du volume de filtrage spatial.

S'en suit donc une diminution du volume d'excitation du fait de la présence des boîtes quantiques 10, et donc une diminution du volume d'observation 7 du dispositif de microscopie, correspondant à une zone de focalisation en microscopie confocale, à quelques nanomètres de la surface, puisque l'on ne peut observer que la fluorescence des molécules proches des boîtes quantiques 10 et donc on ne pourra observer que la fluorescence des molécules contenues dans un volume d'observation potentielle du phénomène de FRET 6 délimité par la position de ces boîtes et ci-après appelé volume de FRET. Ce volume de FRET 6 étant limité dans le sens axial (i.e. dans le sens de l'axe optique), le volume d'observation 7 s'en trouve réduit dans le sens axial. Le volume d'observation 7 du dispositif de microscopie comprend tout ou partie du volume 6 d'observation du phénomène de FRET.

Il apparaîtra immédiatement à l'homme du métier que tout type d'éléments (autres que nano-objets luminescents) pourra être utilisé dans le cadre de l'invention, dans la mesure où ces éléments sont susceptibles de donner lieu à une excitation des fluorophores en solution par FRET entre ces éléments (donneurs) et les fluorophores (accepteurs). De même, la forme de ces éléments peut être différente de la forme sphérique décrite ci-dessus.

L'homme du métier notera aussi que l'excitation des nano-objets luminescents 10 peut être réalisée par un rayonnement lumineux ou bien par toute autre technique d'excitation connue dans le domaine en cause, par exemple par excitation électrique.

On peut prévoir également des moyens de filtrage spectral pour que seuls les photons émis par l'accepteur (fluorophores) soient détectés par le capteur 11, par exemple un filtre filtrant les longueurs d'onde d'émission du donneur (boîtes quantiques).

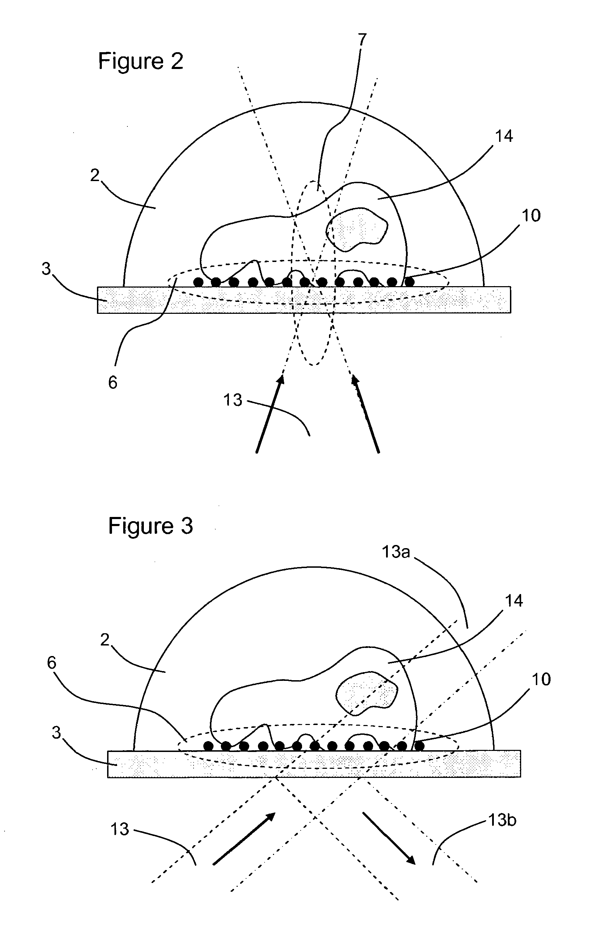

Les figures 2 et 3 représentent des schémas de systèmes d'imagerie selon des modes de réalisation de l'invention, avec des éclairages respectivement focalisés et grand champ.

Dans ces deux variantes, on cherche à imager une cellule vivante 14 présente dans le milieu biologique 2. Des boîtes quantiques 10 sont pour cela déposées sur le substrat 3, de sorte à générer un transfert d'énergie non-radiatif en direction des fluorophores de l'échantillon 2 sur une faible étendue axiale, représentée par le volume de FRET 6 délimité par des pointillés.

En référence à la figure 2, il est pratiqué un éclairage focalisé 13, à l'aide de moyens de focalisation adéquats. Le point de focalisation visé se situe au niveau de la surface supérieure du substrat 3, où sont disposées les boîtes quantiques 10. On obtient alors une tâche de focalisation, correspondant au volume d'observation 7 délimité par des pointillés.

En référence à la figure 3, il est pratiqué un éclairage grand champ 13, à l'aide de moyens de collimation ou autres. Cet éclairage vise une partie du substrat 3, selon une inclinaison non-nulle vis-à-vis de la perpendiculaire à la surface de ce substrat. Une partie 13a de la lumière traverse ainsi le substrat, tandis qu'une autre partie 13b est réfléchie sur sa surface.

Le transfert d'énergie non-radiatif se produit à chaque fois dans la zone délimitée par le volume de FRET 6, ce qui permet de n'imager que la zone à proximité du substrat 3. Le volume d'observation 7 s'en trouve donc réduit axialement. Parmi les applications possibles de ce type de réalisation, il est possible d'imager une cellule vivante 14 de sorte à voir quels sont ses points de contact avec le substrat 3, ce que ne permettait pas jusqu'alors les systèmes d'imagerie et/ou de spectroscopie connus dans l'état de la technique.

Les avantages à utiliser des boites quantiques comme donneurs pour des applications en FRET sont liés au fait qu'on s'affranchit quasi intégralement du bruit de fond produit d'une part par les cellules (autofluorescence et Raman), d'autre part par l'excitation directe de l'accepteur.

Grâce à la présente solution, le volume d'observation n'est plus défini par la zone d'éclairage du faisceau laser (comme selon l'art antérieur) mais par la zone d'efficacité du FRET, typiquement donnée par le rayon de Fôrster $R_0$.

## Revendications

1. Système d'imagerie pour l'analyse de molécules fluorescentes dans un échantillon (2), le système comprenant ledit échantillon (2) et un dispositif de microscopie (1) confocale ou grand champ comportant un support (3) en contact avec au moins une partie dudit échantillon (2), **caractérisé en ce que** la surface du support (3) en contact avec ledit échantillon (2) comprend des nano-objets (10) luminescents susceptibles de donner lieu à une excitation des molécules fluorescentes présentes dans l'échantillon (2) par transfert d'énergie non-radiative de type Förster (FRET) lorsque ces nano-objets (10) sont préalablement excités.

2. Système d'imagerie selon la revendication 1, dans lequel les nano-objets luminescents (10) sont préalablement excités par un rayonnement lumineux ou une excitation électrique.

3. Système d'imagerie selon la revendication 2, dans lequel les nano-objets luminescents (10) sont préalablement excités par un rayonnement lumineux laser émettant dans le bleu.

4. Système d'imagerie selon l'une quelconque des revendications précédentes, dans lequel les nano-objets luminescents (10) se présentent sous la forme de nano-cristaux semi-conducteurs luminescents.

5. Système d'imagerie selon l'une quelconque des revendications précédentes, comprenant au moins deux types de nano-objets luminescents (10) différents agencés pour que leurs énergies soient transférées de manière non-radiative en direction de molécules présentes au niveau et à proximité de ladite surface et de natures différentes.

6. Système d'imagerie selon l'une des revendications précédentes, dans lequel le dispositif de microscopie (1) est muni de moyens d'illumination (4) susceptibles d'émettre un faisceau lumineux, et muni d'un moyen de focalisation (5) agencé d'une part de manière à diriger ledit faisceau vers l'échantillon (2), et d'autre part de manière à collecter l'intensité lumineuse de fluorescence émise par les molécules fluorescentes présentes dans l'échantillon (2).

7. Système d'imagerie selon l'une des revendications précédentes, dans lequel le dispositif de microscopie est muni d'un moyen de filtrage spatial (8) apte à créer un volume d'observation (7) englobant les nano-objets luminescents (10) présents au niveau de ladite surface du support (3) et les molécules fluorescentes présentes dans l'échantillon (2).

8. Utilisation d'un système d'imagerie selon l'une des revendications 1 à 7 pour réaliser un système de spectroscopie par corrélation de fluorescence, le dispositif de microscopie confocale (1) étant muni d'un moyen d'illumination (4) apte à émettre un faisceau lumineux d'excitation (13) en direction de l'échantillon (2).

9. Utilisation d'un système d'imagerie grand champ selon l'une des revendications 1 à 6 pour déterminer les positions des points de contact entre une cellule vivante et le support (3) dudit système.

10. Procédé d'analyse de molécules fluorescentes dans un échantillon (2) par

un système d'imagerie selon l'une quelconque des revendications 1 à 7, comprenant un dispositif de microscopie confocale (1) comportant un support (3) en contact avec au moins une partie dudit échantillon (2), **caractérisé en ce que** le procédé comprend des étapes consistant à :

- exciter préalablement des nano-objets (10),
- mettre en contact le support (3) et une partie au moins dudit échantillon (2), et
- collecter l'intensité lumineuse de fluorescence émise par les molécules fluorescentes présentes dans l'échantillon (2).

**11.** Procédé selon la revendication 10, dans lequel les nano-objets luminescents (10) sont préalablement excités par un rayonnement lumineux, en particulier un rayonnement lumineux laser émettant dans le bleu, ou une excitation électrique.

**Patentansprüche**

**1.** Bildgebungssystem für die Analyse fluoreszierender Moleküle in einer Probe (2), wobei das System die Probe (2) und eine Konfokal- oder Großfeld-Mikroskopvorrichtung (1) umfasst, die einen Träger (3) aufweist, der mit wenigstens einem Teil der Probe (2) in Kontakt ist, **dadurch gekennzeichnet, dass** die Oberfläche des Trägers (3), die mit der Probe (2) in Kontakt ist, lumineszierende Nanoobjekte (10) umfasst, die eine Anregung der fluoreszierenden Moleküle, die in der Probe (2) vorhanden sind, mittels strahlungsfreiem Energietransfer, von der Art eines Förster-Resonanzenergietransfers (FRET), veranlassen sollen, wenn diese Nanoobjekte (10) im Voraus angeregt werden.

**2.** Bildgebungssystem nach Anspruch 1, wobei die lumineszierenden Nanoobjekte (10) im Voraus durch eine Lichtstrahlung oder eine elektrische Anregung angeregt werden.

**3.** Bildgebungssystem nach Anspruch 2, wobei die lumineszierenden Nanoobjekte (10) im Voraus durch eine Laserlichtstrahlung angeregt werden, die im blauen Bereich emittiert.

**4.** Bildgebungssystem nach einem der vorhergehenden Ansprüche, wobei sich die lumineszierenden Nanoobjekte (10) in Form von lumineszierenden Halbleiter-Nanokristallen darstellen.

**5.** Bildgebungssystem nach einem der vorhergehenden Ansprüche, umfassend wenigstens zwei verschiedene Arten von lumineszierenden Nanoobjekten (10), die angeordnet sind, damit ihre Energien strahlungsfrei in die Richtung von Molekülen übertragen werden, die auf Höhe und in der Nähe der Oberfläche vorhanden und unterschiedlicher Natur sind.

**6.** Bildgebungssystem nach einem der vorhergehenden Ansprüche, wobei die Mikroskopvorrichtung (1) mit Beleuchtungsmitteln (4) ausgestattet ist, die ein Lichtbündel emittieren sollen, und mit einem Fokussierungsmittel (5), das einerseits so angeordnet ist, um das Bündel zur Probe (2) zu lenken, und andererseits so, um die Fluoreszenzlichtstärke zu sammeln, die von den fluoreszierenden Molekülen, die in der Probe (2) vorhanden sind, emittiert wird.

**7.** Bildgebungssystem nach einem der vorhergehenden Ansprüche, wobei die Mikroskopvorrichtung mit einem Raumfiltermittel (8) ausgestattet ist, das imstande ist, ein Beobachtungsvolumen (7) zu schaffen, das die lumineszierenden Nanoobjekte (10), die auf Höhe der Oberfläche des Trägers (3) vorhanden sind, und die fluoreszierenden Moleküle umfasst, die in der Probe (2) vorhanden sind.

**8.** Verwendung eines Bildgebungssystems nach einem der Ansprüche 1 bis 7 für die Herstellung eines Fluoreszenz-Korrelations-Spektroskopie-Systems, wobei die Konfokal-Mikroskopvorrichtung (1) mit einem Beleuchtungsmittel (4) ausgestattet ist, das imstande ist, ein Anregungslichtbündel (13) in Richtung Probe (2) zu emittieren.

**9.** Verwendung eines Großfeld-Bildgebungssystems nach einem der Ansprüche 1 bis 6 zur Bestimmung der Positionen der Kontaktpunkte zwischen einer lebenden Zelle und dem Träger (3) des Systems.

**10.** Verfahren zur Analyse von fluoreszierenden Molekülen in einer Probe (2) mit Hilfe eines Bildgebungssystems nach einem der Ansprüche 1 bis 7, umfassend eine Konfokal-Mikroskopvorrichtung (1) mit einem Träger (3), der mit wenigstens einem Teil der Probe (2) in Kontakt ist, **dadurch gekennzeichnet, dass** das Verfahren folgende Schritte umfasst:

- Anregen der Nanoobjekte (10) im Voraus,
- In-Kontakt-Bringen des Trägers (3) mit wenigstens einem Teil der Probe (2), und
- Sammeln der Fluoreszenzlichtstärke, die von den fluoreszierenden Molekülen emittiert wird, die in der Probe (2) vorhanden sind.

**11.** Verfahren nach Anspruch 10, wobei die lumineszierenden Nanoobjekte (10) durch eine Lichtstrahlung, insbesondere eine Laserlichtstrahlung, die im blauen Bereich emittiert, oder eine elektrische Anregung im Voraus angeregt werden.

**Claims**

**1.** Imaging system for analysing fluorescent molecules in a sample (2), the system comprising said sample (2) and a confocal or wide-field microscopy device (1) comprising a substrate (3) in contact with at least a portion of said sample (2), **characterised in that** the surface of the substrate (3) in contact with said sample (2) comprises luminescent nano-objects (10) suitable for giving rise to excitation of the fluorescent molecules found in the sample (2) by means of Förster type non-radiative energy transfer (FRET) when these nano-objects (10) are previously excited.

**2.** Imaging system according to claim 1, wherein the luminescent nano-objects (10) are previously excited by light radiation or electric excitation.

**3.** Imaging system according to claim 2, wherein the luminescent nano-objects (10) are previously excited by a laser light ray emitting in the blue range.

**4.** Imaging system according to any of the above claims, wherein the luminescent nano-objects (10) are in the form of luminescent semiconductor nano-crystals.

**5.** Imaging system according to any of the above claims, comprising at least two types of different luminescent nano-objects (10) arranged so that the energies thereof are transferred in a non-radiative manner towards molecules found on and in the vicinity of said surface and of different types.

**6.** Imaging system according to any of the above claims, wherein the microscopy device (1) is provided with illumination means (4) suitable for emitting a light beam, and provided with focussing means (5) arranged so as to direct said beam towards the sample (2) and so as to capture the fluorescent light intensity emitted by the fluorescent molecules found in the sample (2).

**7.** Imaging system according to any of the above claims, wherein the microscopy device is provided with spatial filtering means (8) suitable for creating an observation volume (7) encompassing the luminescent nano-objects (10) at the level of surface of the substrate (3) and the fluorescent molecules found in the sample (2).

**8.** Use of an imaging system according to any of claims 1 to 7 for producing a fluorescence correlation spectroscopy system, the confocal microscopy device (1) being provided with illumination means (4) suitable for emitting an excitation light beam (13) towards the sample (2).

**9.** Use of a wide-field imaging system according to any of claims 1 to 6 for determining the positions of the contact points between a living cell and the substrate (3) of said system.

**10.** Method for analysing fluorescent molecules in a sample (2) using an imaging system according to any of claims 1 to 7 comprising a confocal microscopy device (1) comprising a substrate (3) in contact with at least a portion of said sample (2), **characterised in that** the method comprises steps consisting of:

- previously exciting the nano-objects (10),
- contacting the substrate (3) and at least a portion of said sample (2), and
- capturing the fluorescent light intensity emitted by the fluorescent molecules found in the sample (2).

**11.** Method according to claim 10, wherein the luminescent nano-objects (10) are previously excited by light radiation, particularly laser light radiation emitting in the blue range, or electric excitation.

**Figure 1**

Figure 2

Figure 3

Figure 4

Figure 5

longueur d'onde (nm)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **XAVIER MICHALET et al.** Ultrahigh Resolution Multicolor Colocalization of Single Fluorescent Nanocrystals. *Proceedings of the SPIE,* 24 Janvier 2001, vol. 4258, 8-15